# EUROPÄISCHE PATENTANMELDUNG

(11) **EP 2 186 389 A1**
(43) Veröffentlichungstag der Anmeldung: **19.05.2010**
(21) Anmeldenummer: 09008788.3
(22) Anmeldetag: 04.07.2009
(51) Int. Cl.: A01B 79/00, A01D 41/127

(54) **Landwirtschaftlicher Maschinenverband**

(30) Priorität: 10.07.2008 DE 102008032418
(71) Anmelder: CLAAS Selbstfahrende Erntemaschinen GmbH, 33428 Harsewinkel (DE)
(72) Erfinder: Diekhans, Norbert, Dr., 33335 Gütersloh (DE); Meyer zu Helligen, Lars Peter, 32139 Spenge (DE)
(74) Vertreter: Heuer, Wilhelm

(57) **Zusammenfassung**

Ein Maschinenverband umfasst eine Mehrzahl von selbstfahrenden landwirtschaftlichen Maschinen (1, 2, 2', 40, 41), die in der Lage sind, zur Erledigung einer eine Mehrzahl von Teilaufgaben umfassenden gemeinschaftlichen Aufgabe zusammenzuwirken. Wenigstens eine erste Maschine (1, 2, 2'; 40, 41) des Verbands weist einen Bordrechner (45, 47, 47', 48) auf. Ein zweiter Rechner (47; 47'; 48) und der Bordrechner (45) sind eingerichtet, jeweils als Leitrechner für wenigstens eine der Teilaufgaben zu fungieren.

## Beschreibung

Die vorliegende Erfindung betrifft einen Maschinenverband mit einer Mehrzahl von selbstfahrenden landwirtschaftlichen Maschinen, die in der Lage sind, zur Erledigung einer gemeinschaftlichen Aufgabe zusammenzuwirken.

Bei einem aus DE 197 05 842 A1 bekannten derartigen Maschinenverband arbeiten zum Abernten einer Fläche mehrere Mähdrescher oder Feldhäcksler mit jeweils einem Ladewagen zusammen. Das System umfasst eine stationäre Leitstelle sowie mehrere mobile Leitstellen, die Informationen an die stationäre Leitstelle liefern und anhand von von dort zurückgegebener Information die Maschinen steuern. Indem auf diese Weise einzelne Funktionen der Maschinen automatisiert werden, wird die Arbeit der Maschinenführer erleichtert, und insbesondere dann, wenn es gelingt, Funktionen zu automatisieren, die ein hohes Maß an Erfahrung seitens der Maschinenführer voraussetzen, kann die gemeinschaftliche Aufgabe auch mit wenig geübtem, unerfahrenem Personal effizient und kostengünstig erledigt werden. Im Extremfall wird sogar die Möglichkeit in Betracht gezogen, einige der Maschinen auf dem Feld ohne Maschinenführer zu betreiben.

Die Zusammenfassung der Steueraufgaben in einem Leitrechner erfordert eine hohe Rechenleistung und eine hohe Bandbreite für die Kommunikation des Leitrechners mit den diversen Maschinen.

DE 195 14 223 A1 befasst sich mit der Optimierung eines Verbandes von landwirtschaftlichen Maschinen nach dem Oberbegriff des Anspruchs 1. Der Leitrechner und Bordrechner der Maschinen bilden ein hierarchisches System, in welchem der Leitrechner Daten von den Bordrechnern der Maschinen übermittelt bekommt und anhand dieser Daten festgelegte Befehle an die Bordrechner zurück übermittelt.

Aufgabe der vorliegenden Erfindung ist, einen Maschinenverband zu schaffen, bei dem die erforderliche Rechenleistung des Leitrechners und die für die Kommunikation der Maschinen untereinander benötigte Bandbreite reduziert sind.

Die Aufgabe wird gelöst, indem bei einem Maschinenverband mit einer Mehrzahl von selbstfahrenden landwirtschaftlichen Maschinen, die in der Lage sind, zur Erledigung einer eine Mehrzahl von Teilaufgaben umfassenden gemeinschaftlichen Aufgabe zusammenzuwirken, zumindest einer ersten der Maschinen des Maschinenverbandes eine Führungsfunktion für zumindest eine der Teilaufgaben zuweisbar ist. Infolge der Aufteilung der Aufgabe reduzieren sich die Anforderungen an die Verarbeitungsleistung reduzieren sich die Anforderungen an die Verarbeitungsleistung eines Leitrechners; im bevorzugten Extremfall entfällt der Leitrechner ganz, indem seine Verarbeitungsleistung auf die Maschinen des Verbandes verteilt ist. Durch eine zweckmäßige Zerlegung der gemeinschaftlichen Aufgabe in Teilaufgaben und Zuweisung der Führungsfunktion für eine Teilaufgabe an eine jeweils geeignet positionierte Maschine lässt sich auch der Bedarf an Kommunikationsbandbreite verringern.

Die Führungsfunktion einer der Maschinen gegenüber den anderen kann unterschiedliche Ausprägungen haben. Vorzugsweise beinhaltet die Führungsfunktion für zumindest eine der Teilaufgaben, dass die die Führungsfunktion übernehmende erste Maschine Informationen, die zumindest eine weitere der Maschinen des Maschinenverbandes zur Erledigung dieser Teilaufgabe benötigt, an diese weitere Maschine übermittelt.

Besagte benötigten Informationen können von der die Führungsfunktion innehabenden Maschine in einem einheitlichen Verarbeitungsvorgang für jede der mehreren Maschinen spezifisch erzeugt sein. Dieser Ansatz ist insbesondere für logistische Teilaufgaben oder allgemein solche Teilaufgaben geeignet, bei denen die Teilaufgabe weiter in unterschiedliche Unter-Teilaufgaben zergliedert werden kann, zu deren Ausführung eine einzige Maschine genügt, so dass die Zuweisung einer Unter-Teilaufgabe an eine der Maschinen impliziert, dass dieselbe Unter-Teilaufgabe keiner anderen Maschine mehr zugewiesen werden darf.

Bei einem anderen Typ von Teilaufgabe kann es zweckmäßig sein, dass die Führungsfunktion übernehmende erste Maschine die von mehreren der Maschinen des Maschinenverbandes zur Erledigung dieser Teilaufgabe benötigten Informationen für jede der mehreren Maschinen identisch erzeugt. Dieser Ansatz eignet sich insbesondere für eine Teilaufgabe, die in ununterscheidbare Teilaufgaben zergliedert werden kann, wie etwa die Verarbeitung einer bestimmten Menge an Material, wobei jeder Maschine die Verarbeitung eines Teil des Materials obliegt und die von der ersten Maschine gelieferte benötigte Information die Art und Weise der Verarbeitung spezifiziert.

Als weitere Alternative kann die die Führungsfunktion übernehmende erste Maschine die von mehreren der Maschinen des Maschinenverbandes zur Erledigung der Teilaufgabe benötigten Informationen durch wiederholte Ausführung eines gleichen Verarbeitungsvorgangs mit für jeweils eine der mehreren Maschinen spezifischen Eingangsdaten erzeugen. Dies ermöglicht insbesondere der ersten Maschine, bei der Festlegung der Art und Weise der Verarbeitung eines Materials Besonderheiten jeder einzelnen verarbeitenden Maschine zu berücksichtigen.

Wenn mehrere der Maschinen jeweils einen Bordrechner aufweisen, ist es zweckmäßig, dass der Bordrechner der die Führungsfunktion für eine der Teilaufgaben übernehmenden ersten Maschine bezüglich dieser Teilaufgabe als Leitrechner gegenüber den Bordrechnern der anderen Maschinen fungiert.

Das Vorhandensein von Bordrechnern auf mehreren Maschinen eröffnet dies die Möglichkeit, die Leitrechnereigenschaft dynamisch an den Bordrechner derjenigen Maschine zuzuweisen, die gerade für die Kommunikation mit anderen, zu leitenden Fahrzeugen günstig platziert ist und/oder deren Fahrer für die Betreuung des Leitrechners Kompetenz und/oder Zeit hat.

Die Zuweisung der Eigenschaft, Leitrechner für eine Teilaufgabe zu sein, kann durch Fahrer der Fahrzeuge oder anderes kompetentes Personal zu Beginn der Bearbeitung der gemeinschaftlichen Aufgabe vorgenommen werden. Die Leitrechnereigenschaft kann aber auch während der Bearbeitung der gemeinschaftlichen Aufgabe von einem Rechner an einen anderen übertragen werden.

Es kann ein zweiter Rechner vorgesehen sein, der eingerichtet ist, als Leitrechner für wenigstens eine zweite Teilaufgabe zu fungieren. Vorzugsweise ist dieser zweite Rechner ein Bordrechner einer anderen Maschine des Verbands. Dies verringert den Bedarf an Bandbreite für Datenfernübertragung weiter, da die Notwendigkeit entfällt, in Verbindung mit der zweiten Teilaufgabe an der anderen Maschine aufgenommene Sensordaten an einen entfernten Leitrechner zu übermitteln bzw. Steuerinformation von diesem zu empfangen.

Einer ersten Ausgestaltung zur Folge sind die erste Maschine und wenigstens eine zweite Maschine homolog, das heißt sie weisen ein funktionsgleiches Arbeitswerkzeug auf, und die Arbeitswerkzeuge der ersten und zweiten Maschinen sind durch gleiche Werte der Steuerinformation in jeweils gleicher Weise steuerbar. Da für die Verbreitung der Steuerinformation an die Arbeitswerkzeuge der ersten Maschine keine Funkverbindung benötigt wird, kann der Bandbreitenbedarf der Funkverbindung weiter reduziert werden.

Zweckmäßigerweise umfasst die erste Maschine wenigstens einen Sensor zum Ermitteln von Steuerinformation oder von für die Bestimmung der Steuerinformation benötigten Eingabedaten. Indem diese Daten am Ort ihrer Gewinnung, das heißt auf der ersten Maschine, verarbeitet werden, wird die herkömmlicherweise für die Übertragung zum Leitrechner benötigte Kommunikationsbandbreite eingespart.

Die zweite Maschine, die die Steuerinformation vom Bordrechner der ersten Maschine empfängt, benötigt ihrerseits keinen zum Sensor der ersten Maschine homologen Sensor. Durch die Weglassung eines solchen Sensors können Kosten gespart werden.

Es kann aber auch die zweite Maschine wenigstens einen Sensor zum Ermitteln von für die Bestimmung der Steuerinformation benötigten Eingabedaten aufweisen und eingerichtet sein, diese Eingabedaten an die erste Maschine zu übermitteln. Dies schafft z. B. die Möglichkeit, an Bord der ersten Maschine für die betreffende zweite Maschine spezifische Steuerinformation festzulegen und an sie zu übermitteln, oder anhand von von mehreren Sensoren verschiedener Maschinen gelieferten Eingabedaten einen Mittelwert der Steuerinformation festzulegen und anhand dieses Mittelwertes für alle diese Maschinen brauchbare Werte der Steuerinformation zu ermitteln und an die betreffenden Maschinen zu übertragen.

Einer ersten Ausgestaltung zufolge ist der Bordrechner der ersten Maschine eingerichtet, die Steuerinformation anhand der von dem wenigstens einen Sensor gelieferten Eingabedaten zu berechnen. Alternativ oder ergänzend kann außerdem eine Benutzerschnittstelle an der ersten Maschine vorgesehen sein, um die Steuerinformation von einem Benutzer zu empfangen. Der Empfang der Steuerinformation kann z.B. darin beruhen, dass der Benutzer an entsprechenden Reglern der Benutzerschnittstelle geeignete Einstellungen für Arbeitswerkzeuge der ersten Maschine vornimmt. Anhand der so eingegebenen Information wird nicht nur das Arbeitswerkzeug der ersten Maschine eingestellt, sondern sie wird auch an die zweiten Maschinen weitergegeben, um einen Betrieb von deren Arbeitswerkzeugen mit derselben Einstellung wie bei der ersten Maschine zu ermöglichen. So genügt ein einziger erfahrener Benutzer auf der ersten Maschine, der deren Arbeitswerkzeug geschickt einzustellen weiß, um auch die zweiten Maschinen effizient zu betreiben.

Die Benutzerschnittstelle kann darüber hinaus Anzeigeelemente für von einem Sensor - der ersten oder einer zweiten Maschine - erfasste Eingabedaten aufweisen, die es dem Benutzer ermöglichen, eine passende Einstellung der Arbeitswerkzeuge zu wählen.

An der zweiten Maschine wiederum kann eine Benutzerschnittstelle zum Anzeigen von empfangener Steuerinformation vorgesehen sein. Ein Benutzer der zweiten Maschine braucht somit nicht selbst eine passende Einstellung für das Arbeitswerkzeug seiner Maschine zu suchen, sondern er kann sich darauf beschränken, das Arbeitswerkzeug entsprechend der ihm angezeigten Steuerinformation einzustellen. Der Benutzer ist so nicht völlig von der Aufgabe entbunden, die Arbeitswerkzeuge zu steuern, dafür hat er aber die Möglichkeit, erhaltene Steuerinformation zu ignorieren oder zu korrigieren, wenn sie für seine Situation offensichtlich unzweckmäßig ist.

Der Benutzer der zweiten Maschine kann von der Aufgabe, das Arbeitswerkzeug zu steuern, vollends entlastet werden, wenn ein Bordrechner der zweiten Maschine eingerichtet ist, diese anhand der empfangenden Information zu steuern.

Bei der gemeinschaftlichen Aufgabe kann es sich insbesondere um das Verteilen von Material wie etwa Saatgut, Dünger oder Wirkstoffen auf oder das Sammeln von Material, insbesondere Erntegut, von einer landwirtschaftlichen Fläche handeln.

Der erfindungsgemäße Verband umfasst vorzugsweise Maschinen von wenigstens zwei Typen, wobei die Maschinen des ersten Typs zur Erledigung einer ersten Teilaufgabe und die Maschinen des zweiten Typs zur Erledigung einer zweiten Teilaufgabe vorgesehen sein können.

Um den Kommunikationsaufwand zu minimieren, sollte die Fähigkeit, Leitrechner für eine bestimmte Teilaufgabe zu sein, vorzugsweise den Bordrechnern von Maschinen des für diese Teilaufgabe vorgesehenen Typs vorbehalten sein, oder zumindest sollte ein Bordrechner einer Maschine dieses Typs als Leitrechner für die Teilaufgabe bevorzugt sein.

Als erste Teilaufgabe kommt insbesondere die Navigation der Maschinen in Betracht; das heißt ein für diese Teilaufgabe als Leitrechner designierter Rechner ist zuständig für die Kursbestimmung der einzelnen Maschinen und für die Verbreitung der den Kurs definierenden Steuerinformation an die Maschinen.

Als eine zweite Teilaufgabe kommt dann insbesondere die Steuerung von Arbeitswerkzeugen, insbesondere von landwirtschaftliches Material handhabenden Aggregaten der Maschinen, in Betracht. Bei dem landwirtschaftlichen Material kann es sich um Ernte-oder Saatgut, Dünger, chemische Hilfsstoffe oder dergleichen handeln. Die Steuerung von dieses Material handhabenden Aggregaten kann dementsprechend die Steuerung eines Dreschwerks eines Mähdreschers in Abhängigkeit beispielsweise von der Bestandsdichte und der Feuchtigkeit des zu erntenden Getreides, die Steuerung der Wurfrichtung eines Dünger- oder Saatgutstreuers in Abhängigkeit von einer vorherrschenden Windrichtung oder dergleichen umfassen.

Möglich ist auch, eine gemeinschaftliche Aufgabe wie etwa das Abernten eines Feldes unter Einsatz mehrerer Ernte- und Transportmaschinen zu gliedern in die Navigation der Maschinen auf öffentlichen Verkehrswegen als eine erste Teilaufgabe und die Navigation der Maschinen auf dem Feld als zweite Teilaufgabe. Während die erste Teilaufgabe die Übermittlung der Steuerinformation über Entfernungen von im Allgemeinen mehreren Kilometern erfordert und daher zweckmäßig über eine öffentliche Kommunikationsinfrastruktur, insbesondere über zellularen Mobilfunk, von einem stationären Leitrechner aus abwickelbar ist, ist für die zweite Teilaufgabe ein Kurzstrecken-Kommunikationsnetz mit direkten Funkverbindungen zwischen den einzelnen Maschinen besser geeignet.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1: eine schematische Darstellung eines Mäh- dreschers als Beispiel für eine erste Ma- schine des erfindungsgemäßen Maschinen- verbands;
- Fig. 2: eine typische Einsatzsituation eines Ma- schinenverbandes, der mehrere Mähdrescher und Transportfahrzeuge umfasst.

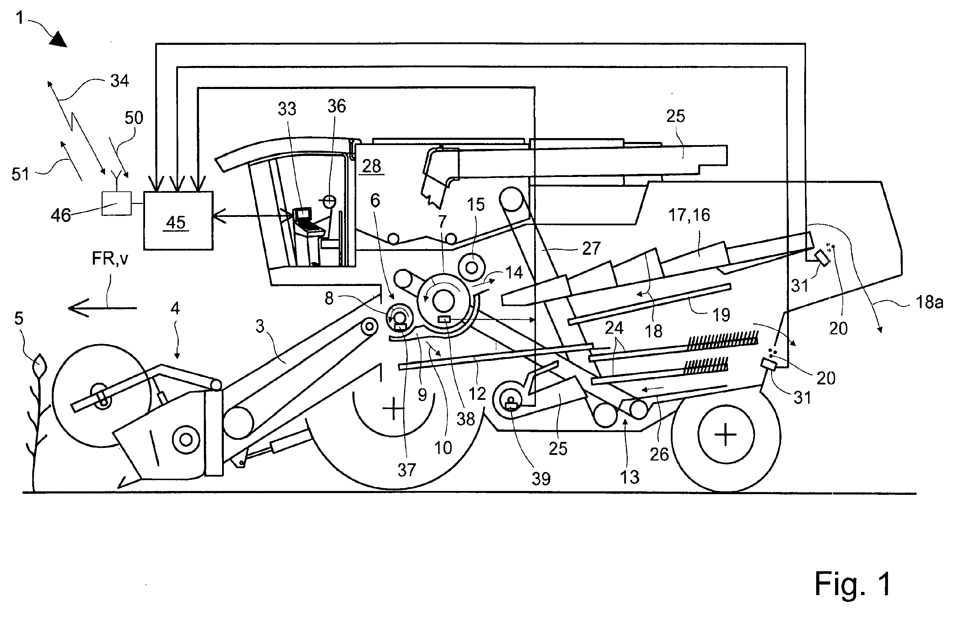

Fig. 1 zeigt als Beispiel eines in einem erfindungsgemäßen Verband einsetzbaren Fahrzeugs einen Mähdrescher 1, der in seinem in Fahrtrichtung FR weisenden frontseitigen Bereich ein Schneidwerk 4 trägt, welches gewachsenes Erntegut 5 aberntet und zusammenführt. Die Höhe des Schneidwerks 4 über dem Boden ist verstellbar und stellt einen durch den Fahrer 36 des Mähdreschers 1 oder in später noch genauer beschriebener Weise aus der Ferne gesteuerten Betriebsparameter des Mähdreschers 1 dar.

Über ein Schrägförderorgan 3 gelangt das Erntegut in an sich bekannter Weise zu Dreschorganen 6, die in der Darstellung der Fig. 1 aus einer ersten Dreschtrommel 8 und einer dieser nachgeordneten zweiten Dreschtrommel 7 bestehen. Die Geschwindigkeit der Dreschtrommeln 7, 8 sowie ebenfalls ihr Abstand von einem sie auf einen Teil ihres Umfangs umgebenden Dreschkorb 9 stellen weitere Betriebsparameter des Mähdreschers 1 dar.

Am Dreschkorb 9 wird aus dem Erntegut ein erster im Wesentlichen aus Körnern, Kurzstroh und Spreu bestehender Gutstrom 10 abgeschieden, der über einen Vorbereitungsboden 12 in eine Reinigungseinrichtung 13 gelangt. Ein zweiter Gutstrom 14 wird im rückwärtigen Bereich der Dreschorgane 6 mittels einer Wendetrommel 15 an eine als Hordenschüttler 17 ausgeführte Trenneinrichtung 16 übergeben. Auf dem Hordenschüttler 17 wird ein weiterer im Wesentlichen aus Körnern, Stroh und Spreu bestehender Gutstrom 18 abgeschieden und über einen Rücklaufboden 19 und den Vorbereitungsboden 12 ebenfalls an die Reinigungseinrichtung 13 übergeben. Am hinteren Ende des Hordenschüttlers 17 tritt ein im Wesentlichen aus Stroh und zu einem geringen Anteil aus Körnern, dem so genannten Kornverlust 20, bestehender Gutstrom 18a aus dem Mähdrescher 1 aus. Frequenz und Amplitude der Bewegung des Hordenschüttlers 17 können weitere Betriebsparameter des Mähdreschers 1 darstellen.

Die Reinigungseinrichtung 13 umfasst bewegte Siebe 24 und ein Gebläse 25. Auch Eigenschaften der Siebbewegung wie Schwingamplitude und -frequenz können zu den Betriebsparametern des Mähdreschers 1 gehören.

In Folge der Schüttelbewegung der Siebe 24 wandert der Gutstrom auf diesen nach hinten, wobei Körner, die die Siebe 24 passiert haben, auf einem darunter liegenden schrägen Boden 26 einem Elevator 27 zugeführt werden, der sie in einen Korntank 28 weiter befördert.

Kleinteilige Nichtkornbestandteile des Gutstroms werden beim Passieren der Siebe 24 vom Luftstrom des Gebläses 25 erfasst und aus dem Mähdrescher ausgetragen. Gröbere Bestandteile erreichen die Überkehr am rückwärtigen Ende der Siebe 24, von wo sie zurück zu den Dreschorganen 6 befördert werden. Ein mit Luftdurchsatz oder Strömungsgeschwindigkeit des Gebläses 25 verknüpfter Parameter wie etwa die Drehzahl eines Rotors des Gebläses 25 gehört ebenfalls zu den Betriebsparametern.

Ein Bordrechner 45 des Mähdreschers 1 ist mit einer Vielzahl von Sensoren und Aktoren wie etwa 31, 37, 38, 39 verbunden, um die diversen erwähnten Betriebsparameter des Mähdreschers zu erfassen bzw. zu steuern und um die Effektivität des Erntevorganges betreffende Parameter wie etwa Erntegutdurchsätze an verschiedenen Stellen des Mähdreschers, Kornverluste, Bruchkornanteil, Feuchte, Füllstand des Korntanks 28 etc. zu erfassen. Der Bordrechner 45 kann ausgelegt sein, um anhand dieser Parameter selbst die Einstellungen der diversen oben genannten Betriebsparameter zu optimieren; im vorliegenden Fall ist er mit einer Benutzerschnittstelle 33 in der Fahrerkabine des Mähdreschers 1 verbunden, um dort von den Sensoren erfasste Parameterwerte anzuzeigen, die es dem Fahrer 36 ermöglichen, geeignete Werte für diese Betriebsparameter oder für einen nicht automatisch vom Bordrechner 45 geregelten Teil dieser Betriebsparameter zu bestimmen und einzugeben, die daraufhin von dem Bordrechner 45 an den Aktoren des Mähdreschers 1 eingestellt werden.

Eine mit dem Bordrechner 45 verbundene Funkschnittstelle 46 unterstützt die bidirektionale Kommunikation 34 mit einem entfernten zweiten Rechner (nicht in Fig. 1 dargestellt), den Empfang von GPS-Funksignalen 50 sowie die Übertragung von Signalen 51 an andere Fahrzeuge des Verbandes. Um Reichweitenprobleme bei der Kommunikation mit dem eventuell weit entfernten zweiten Rechner zu vermeiden, kann die Kommunikation mit diesem über ein zellulares Mobilfunknetz stattfinden, wohingegen die Übertragung der Signale 51 vorzugsweise direkt von Fahrzeug zu Fahrzeug stattfindet.

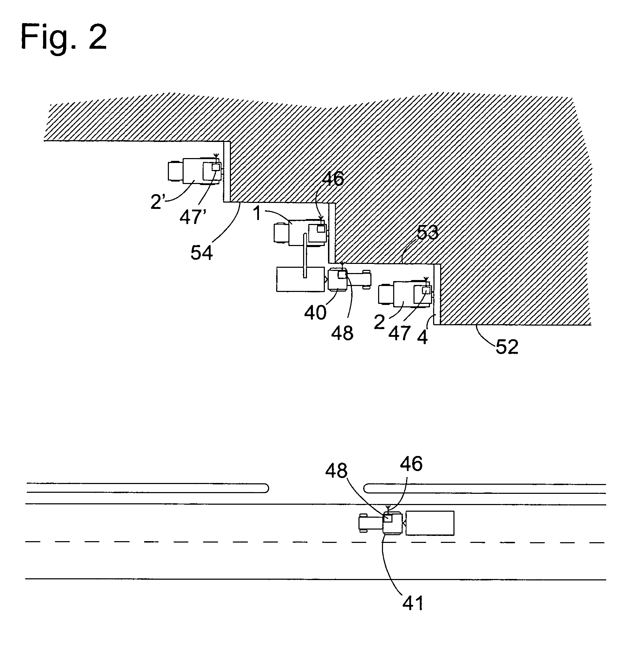

Die Signale 51 codieren vom Fahrer 36 vorgenommene Einstellungen der Betriebsparameter des Mähdreschers 1. Einer ersten Ausgestaltung zufolge werden die Signale 51 vom Bordrechner 47 (siehe Fig. 2) eines auf dem gleichen Feld eingesetzten zweiten Mähdreschers 2 oder 2' empfangen und vom Bordrechner 47 unmittelbar zur Steuerung der diversen Aktoren dieses zweiten Mähdreschers 2 oder 2' eingesetzt. Die oben beschriebenen Sensoren 31, 37, 38, 39, anhand von deren Daten der Fahrer 36 des ersten Mähdreschers 1 die Parametereinstellungen vornimmt, können, da nicht benötigt, bei dem zweiten Mähdrescher 2, 2' entfallen. Der Fahrer des zweiten Mähdreschers 2 oder 2' muss diesen lediglich lenken können, er benötigt keinerlei Kenntnisse über dessen erntespezifische Funktionen, da die Anpassung der Betriebsparameter seines Mähdreschers 2, 2' an die aktuelle Einsatzsituation von dem erfahrenen Fahrer 36 des ersten Mähdreschers 1 vorgenommen wird. Der Bordrechner 45 des Mähdreschers 1 fungiert so gegenüber dem zweiten Mähdrescher 2, 2' als Leitrechner für eine Teilaufgabe "Einsammeln und Dreschen des Ernteguts".

Eine zweite Ausgestaltung sieht vor, dass die in den Signalen 51 codierten Parameterwerte an Bord des zweiten Mähdreschers 2, 2' von dessen Bordrechner 47 nicht unmittelbar eingestellt werden, sondern zunächst dem Fahrer des zweiten Mähdreschers 2, 2' an seiner Benutzerschnittstelle 33 angezeigt werden. Es gehört dann zu den Aufgaben des Fahrers des zweiten Mähdreschers 2 bzw. 2', die angezeigten Parameterwerte an Reglern seiner Benutzerschnittstelle 33 einzustellen und so seinen Mähdrescher anhand dieser Parameterwerte zu steuern. Er behält jedoch die Möglichkeit, einen von einem angezeigten Parameterwert abweichenden Wert einzustellen, wenn der angezeigte für ihn erkennbar unzweckmäßig ist. In diesem Fall ist es zweckmäßig, wenn der zweite Mähdrescher 2, 2' dieselben Sensoren 31, 37, 38 wie der erste Mähdrescher 1 oder zumindest eine Teilmenge von diesen Sensoren aufweist, damit der Fahrer des zweiten Mähdreschers 2, 2' die Informationen verfügbar hat, die er braucht, um die Zweckmäßigkeit der übertragenen Parameter zu beurteilen. Einer weiteren Ausgestaltung zufolge kann vorgesehen werden, dass nicht nur die vom Fahrer 36 des ersten Mähdreschers 1 festgelegten Parameterwerte übertragen werden, sondern auch die von den Sensoren 31, 37, 38, 39 des ersten Mähdreschers 1 erfassten Parameterwerte. So kann der Fahrer des zweiten Mähdreschers 2, 2' leicht erkennen, ob die Voraussetzungen, anhand derer der Fahrer 36 oder der Bordrechner 45 die Einstellungen festgelegt hat, bei ihm auch zutreffen, und er kann gegebenenfalls die übertragenen Parameter abwandeln, um den zweiten Mähdrescher 2, 2' in an dessen Einsatzbedingungen optimal angepasster Weise zu betreiben.

Zwar kann der Fahrer des zweiten Mähdreschers die Besonderheiten dieser Ausgestaltung nur nutzen, wenn er selber über die nötige Erfahrung verfügt, um die Parameter seines Mähdreschers einzustellen; ein Vorteil ergibt sich aus der Übertragung der Parameterwerte des ersten Mähdreschers jedoch auch für ihn, da er der Optimierung der Betriebsparameter seines eigenen Mähdreschers nur noch geringe Aufmerksamkeit widmen muss.

Die Tatsache, dass in diesen beiden letzteren Ausgestaltungen der zweite Mähdrescher 2, 2' nicht gezwungen ist, die Betriebsparameter des ersten Mähdreschers 1 zu übernehmen, ändert nichts daran, dass der Bordrechner 45 des ersten Mähdreschers 1 für Verarbeitung des Ernteguts an Bord der Mähdrescher 1, 2, 2', insbesondere für die Dreschwerksteuerung, als Leitrechner fungiert.

Einer vierten Ausgestaltung zur Folge kommunizieren der erste Mähdrescher 1 und der zweite Mähdrescher 2 oder 2' bidirektional miteinander; der zweite Mähdrescher 2, 2' meldet die Erfassungsergebnisse seiner Sensoren 31, 37, 38, 39 an den ersten. Es gibt verschiedene Möglichkeiten des Umgangs mit diesen Parameterwerten an Bord des ersten Mähdreschers 1. Eine ist, dem Fahrer 36 die Erfassungsergebnisse der Sensoren des zweiten Mähdreschers 2, 2' in der gleichen Weise anzuzeigen wie in Bezug auf seinen eigenen Mähdrescher 1 oben in Verbindung mit der ersten und zweiten Ausgestaltung beschrieben. Anhand der angezeigten Werte nimmt der Fahrer 36 an den Reglern seiner Benutzerschnittstelle 33 eine passende Einstellung vor, die anschließend vom Bordrechner 45 an den zweiten Mähdrescher übertragen wird, um dort - automatisch oder manuell - eingestellt zu werden. Auch hier dient der Bordrechner 45 als Leitrechner für die Dreschwerksteuerung. Der Fahrer 36 muss in diesem Fall der Optimierung des Betriebs der mehreren auf dem Feld im Einsatz befindlichen Mähdrescher 1, 2, 2' ein größeres Maß an Aufmerksamkeit widmen, als wenn er nur seinen eigenen Mähdrescher 1 zu steuern hat, doch wird dies zum Einen durch wirtschaftliche Vorteile kompensiert, da die Fahrer der anderen Mähdrescher 2, 2' die Spezialkenntnisse des Fahrers 36 nicht benötigen, und zum Anderen kann, wie noch genauer beschrieben wird, der Fahrer 36 im Ausgleich von anderen Aufgaben entbunden werden.

Eine andere Möglichkeit der Verarbeitung der Messwerte des zweiten Mähdreschers 2, 2' an Bord des ersten 1 ist, einen Mittelwert der Messwerte homologer Sensoren an Bord des ersten und des zweiten (und ggf. weiterer) Mähdrescher zu bilden und dem Fahrer 36 jeweils gemittelte Sensormesswerte anzuzeigen. Anhand dieser Messwerte kann der Fahrer 36 eine einheitliche Einstellung für alle Mähdrescher 1, 2, 2' auf dem Feld festlegen, die, da sich die Erfassungsergebnisse der Sensoren an Bord der mehreren Mähdrescher 1, 2, 2' im Allgemeinen nicht wesentlich unterscheiden werden, für alle diese Mähdrescher geeignet ist.

Fig. 2 zeigt eine typische Einsatzsituation des Mähdreschers 1 sowie zweiter Mähdrescher 2, 2' auf einem Feld. Die Mähdrescher 1, 2, 2' fahren in üblicher Weise in gestaffelter Anordnung parallel nebeneinander her, wobei sie jeweils einen Streifen des Feldes abernten. Der führende Mähdrescher 2 richtet seinen Fahrweg am Verlauf einer Kante 52 der noch nicht abgeernteten Feldfläche aus, das heißt der Fahrer des Mähdreschers 2 lenkt diesen so, dass eine Kante seines Schneidwerks 4 möglichst exakt und ohne Erntegut stehen zu lassen dem Verlauf der Kante 52 folgt. Die hierfür erforderlichen Lenkmanöver werden vom Bordrechner 47 des führenden Mähdreschers 2 aufgezeichnet und an die nachfolgenden Mähdrescher 1, 2' übertragen. Indem letztere - mit einem der Staffelung entsprechenden Zeitversatz - die Lenkmanöver des Mähdreschers 2 kopieren, kann gewährleistet werden, dass auch sie exakt den jeweils vor ihnen liegenden Feldkantenabschnitten 53, 54 folgen und einen zum Kurs des Mähdreschers 2 exakt parallelen Kurs fahren. Da somit der Fahrer 36 des Mähdreschers 1 sich nicht um die Lenkung kümmern muss, hat er die zur Optimierung des Dreschbetriebs der Mähdrescher 1, 2, 2'erforderliche Zeit zur Verfügung. Der Bordrechner 47 hat somit eine Leitrechnerfunktion in Bezug auf eine Teilaufgabe "Fortbewegung der Mähdrescher in Formation auf dem Feld".

Da sich der Fahrer des Mähdreschers 2' weder mit der Lenkung noch mit der Dreschwerkeinstellung der Mähdrescher zu beschäftigen braucht, kann er sich wiederum einer anderen Aufgabe widmen, wie etwa der von seinem Bordrechner 47' unterstützten Planung der Routen aller Fahrzeuge des Verbands oder zumindest der Mähdrescher unter ihnen. Somit ist es der Bordrechner 47' des Mähdreschers 2', der dem Fahrer des Mähdreschers 2 Anweisungen über den nach dem Abernten eines Feldstreifens weiter zu fahrenden Kurs liefert. Die drei Mähdrescher 1, 2, 2' bilden so ein weitgehend autonomes System, das ohne Unterstützung eines entfernten Leitrechners in der Lage ist, das Abernten eines Feldes optimal zu organisieren.

Um das geerntete Korn abzutransportieren, gehören zu dem Fahrzeugverband auch Transportfahrzeuge 40, 41. Auch sie sind jeweils mit einem Bordrechner 48 und einer Funkschnittstelle 46 ausgerüstet. Der Bordrechner 48 eines der Transportfahrzeuge 40, 41 dient als Leitrechner für die Planung der Wege, welche die Transportfahrzeuge 40, 41 zwischen dem Feld und einer (nicht dargestellten) Sammelstelle zurücklegen, an der das geerntete Korn abgeliefert wird. Hierfür berücksichtigt der Bordrechner 48 die Signale 34 von den Mähdreschern 1, 2, 2', die unter anderem einen aktuellen Füllstand des Korntanks 28 oder eine erwartete Restzeit bis zum Vollwerden des Tanks 28 anzeigen, um die Fahrwege der Transportfahrzeuge 40, 41 so zu planen, dass eines von ihnen rechtzeitig kurz vor dem Vollwerden des Tanks 28 mit dem anfordernden Mähdrescher wie in Fig. 2 für den Mähdrescher 1 und das Transportfahrzeug 40 gezeigt zusammentrifft, um dessen Korntankinhalt zu übernehmen.

Wenn die Transportfahrzeuge 40, 41 zwischen der Sammelstelle und mehreren verschiedenen Feldern unterwegs sind, auf denen sich gleichzeitig Mähdrescher im Einsatz befinden, kann es zweckmäßig sein, wenn die Führungsfunktion für die Fahrwegplanung einem der Transportfahrzeuge 40, 41 bzw. die Leitrechnerfunktion dafür dem Bordrechner 48 des betreffenden Transportfahrzeugs fest zugeordnet ist, da im Allgemeinen nicht davon ausgegangen werden kann, dass sich der Leitrechner immer in direkter Funkreichweite eines Mähdreschers befindet, der einen nahezu vollen Korntank zu melden hat. Sind hingegen die Transportfahrzeuge 40, 41 nur für auf einem gleichen Feld arbeitende Mähdrescher zuständig, dann kann es zweckmäßig sein, dass sich die Transportfahrzeuge 40, 41 in der Führungsfunktion für die Fahrwegplanung abwechseln: der Bordrechner 48 des jeweils auf dem Feld oder im geringstem Abstand vom Feld befindlichen Transportfahrzeugs, hier 40, hat die Leitrechnerfunktion so lange inne, bis es sich beladen vom Feld entfernt. Bei Verlassen des Feldes oder auf dem Weg zur Sammelstelle überträgt es per Funk seinen gesamten Bestand an für die Fahrwegplanung benötigten veränderlichen Daten an ein entgegenkommendes, sich auf dem Weg zum Feld befindliches Fahrzeug 41, dessen Bordrechner 48 daraufhin die Leitrechnerfunktion übernimmt. So ist die Wahrscheinlichkeit, dass ein einen vollen Korntank anzeigendes Signal eines Mähdreschers per zellularen Mobilfunk an den Leitrechner übertragen werden muss, minimiert, und auch die gesamte zu übertragende Datenmenge kann gering gehalten werden, da in den meisten Fällen das die Führungsfunktion innehabende Transportfahrzeug sich auf das Signal des Mähdreschers hin selbst in Bewegung setzen wird, um diesen zu entladen.

Wie man an diesem Beispiel sieht, trägt eine sinnvolle Zerlegung in Teilaufgaben auch zu einer Minimierung des Kommunikationsaufwandes bei: Daten, die nur die Teilaufgaben der Mähdrescher 1, 2, 2'betreffen, wie etwa Dreschwerkeinstellungen oder Feldnavigation, brauchen nur vom zuständigen Leitrechner 45 bzw. 47' an die Mähdrescher, nicht aber an die Transportfahrzeuge verbreitet zu werden.

Entladeanforderungen der Mähdrescher gehen nur an den Leitrechner 48 für die Navigation der Transportfahrzeuge 40, 41 und werden von diesem ausschließlich an dasjenige Transportfahrzeug weitergeleitet, das zum Entladen des anfordernden Mähdreschers vom Leitrechner 48 ausgewählt wurde.

Es liegt auf der Hand, dass die oben beschriebene Grenzziehung zwischen Teilaufgaben nur Beispielcharakter haben kann und dass beliebige andere Aufteilungen der Zuständigkeiten des einen oder anderen Leitrechners im Rahmen der gemeinsamen Gesamtaufgabe möglich sind. Insbesondere kann die Aufteilung der Gesamtaufgabe in Teilaufgaben im Laufe der Bearbeitung der Gesamtaufgabe variieren, oder, was auf dasselbe hinausläuft, es kann auch ein Bordrechner gleichzeitig Leitrechner für verschiedene Teilaufgaben sein, wobei die Menge dieser Teilaufgaben veränderbar sein kann.

### Bezugszeichen

- 1: Mähdrescher
- 2: Mähdrescher
- 2': Mähdrescher
- 3: Schrägförderorgan
- 4: Schneidwerk
- 5: Erntegut
- 6: Dreschorgan
- 7: Dreschtrommel
- 8: Dreschtrommel
- 9: Dreschkorb
- 10: Gutstrom
- 12: Vorbereitungsboden
- 13: Reinigungseinrichtung
- 14: Gutstrom
- 15: Wendetrommel
- 16: Trenneinrichtung
- 17: Hordenschüttler
- 18: Gutstrom
- 18a: Gutstrom
- 19: Rücklaufboden
- 20: Kornverlust
- 24: Sieb
- 25: Gebläse
- 26: Boden
- 27: Elevator
- 28: Korntank
- 31: Sensor
- 33: Benutzerschnittstelle
- 34: Bidirektionale Kommunikation
- 36: Fahrer
- 37: Sensor
- 38: Sensor
- 39: Sensor
- 40: Transportfahrzeug
- 41: Transportfahrzeug
- 45: Bordrechner
- 46: Funkschnittstelle
- 47: Bordrechner
- 47': Bordrechner
- 48: Bordrechner
- 50: GPS-Funksignal
- 51: Signal
- 52: Feldkante
- 53: Feldkante
- 54: Feldkante

## Patentansprüche

1. Maschinenverband mit einer Mehrzahl von selbstfahrenden landwirtschaftlichen Maschinen (1, 2, 2', 40, 41), die in der Lage sind, zur Erledigung einer eine Mehrzahl von Teilaufgaben umfassenden gemeinschaftlichen Aufgabe zusammenzuwirken, **dadurch gekennzeichnet, dass** zumindest einer ersten der Maschinen (1, 2, 2', 40, 41) des Maschinenverbandes eine Führungsfunktion für zumindest eine der Teilaufgaben zuweisbar ist.

2. Maschinenverband nach Anspruch 1, **dadurch gekennzeichnet, dass** die Führungsfunktion für zumindest eine der Teilaufgaben beinhaltet, dass die die Führungsfunktion übernehmende erste Maschine (1, 2, 2', 40, 41) Informationen, die zumindest eine weitere der Maschinen (2, 2', 1, 41, 40) des Maschinenverbandes zur Erledigung dieser Teilaufgabe benötigt, an diese weitere Maschine (2, 2', 1, 41, 40) übermittelt.

3. Maschinenverband nach Anspruch 1 oder 2, **dadurch gekennzeichnet, dass** die Führungsfunktion beinhaltet, dass
die die Führungsfunktion übernehmende erste Maschine (1, 2, 2', 40, 41) die von mehreren der Maschinen (2, 2', 1, 41, 40) des Maschinenverbandes zur Erledigung dieser Teilaufgabe benötigten Informationen in einem einheitlichen Verarbeitungsvorgang für jede der mehreren Maschinen (2, 2', 1, 41, 40) spezifisch erzeugt, oder dass
die die Führungsfunktion übernehmende erste Maschine (1, 2, 2') die von mehreren der Maschinen (2, 2', 1) des Maschinenverbandes zur Erledigung dieser Teilaufgabe benötigten Informationen für jede der mehreren Maschinen (2, 2', 1) identisch erzeugt, oder dass
die die Führungsfunktion übernehmende erste Maschine (1, 2, 2') die von mehreren der Maschinen des Maschinenverbandes zur Erledigung dieser Teilaufgabe benötigten Informationen durch wiederholte Ausführung eines gleichen Verarbeitungsvorgangs mit für jeweils eine der mehreren Maschinen (2, 2', 1) spezifischen Eingangsdaten erzeugt.

4. Maschinenverband nach einem der vorhergehenden Ansprüche, **dadurch gekennzeichnet**, die die Führungsfunktion übernehmende erste Maschine (1, 2, 2', 40, 41) einen Bordrechner zum Bereitstellen und/oder Verarbeiten der zur Erledigung der Teilaufgabe benötigten Informationen aufweist.

5. Maschinenverband nach Anspruch 4, **dadurch gekennzeichnet, dass** mehrere der Maschinen (1, 2, 2', 40, 41) des Verbandes einen Bordrechner (45, 47, 47', 48) aufweisen und dass der Bordrechner (45, 48) der die Führungsfunktion für eine der Teilaufgaben übernehmenden ersten Maschine (1, 40, 41) bezüglich dieser Teilaufgabe als Leitrechner gegenüber den Bordrechnern (47, 47', 48) der anderen Maschinen (2, 2', 41, 40) fungiert.

6. Maschinenverband nach einem der vorhergehenden Ansprüche, **dadurch gekennzeichnet, dass** er einen zweiten Rechner (47; 47'; 48; 45), insbesondere einen Bordrechner (47; 47'; 48; 45) einer anderen Maschine (2; 2'; 40, 41; 1) des Verbands, umfasst, der eingerichtet ist, als Leitrechner für wenigstens eine zweite Teilaufgabe zu fungieren.

7. Maschinenverband nach einem der vorhergehenden Ansprüche, **dadurch gekennzeichnet, dass** die erste Maschine (1) und die wenigstens eine weitere Maschine (2) ein funktionsgleiches Arbeitswerkzeug (4; 6; 13; 16) aufweisen und dass die Arbeitswerkzeuge (4; 6; 13; 16) der ersten und zweiten Maschinen (1, 2) durch gleiche Werte der zur Erledigung einer der Teilaufgaben benötigten Informationen in gleicher Weise steuerbar sind.

8. Maschinenverband nach einem der vorhergehenden Ansprüche, **dadurch gekennzeichnet, dass** die erste Maschine (1) wenigstens einen Sensor (31; 37; 38; 39) zum Ermitteln von zur Erledigung einer der Teilaufgaben benötigter Steuerinformation oder von für die Bestimmung der Steuerinformation benötigten Eingabedaten aufweist.

9. Maschinenverband nach Anspruch 8, **dadurch gekennzeichnet, dass** die zweite Maschine (2) keinen zum Sensor der ersten Maschine homologen Sensor aufweist.

10. Maschinenverband nach einem der Ansprüche 1 bis 8, **dadurch gekennzeichnet, dass** die zweite Maschine (2) wenigstens einen Sensor zum Ermitteln von für die Bestimmung der zur Erledigung einer der Teilaufgaben benötigten Steuerinformation benötigten Eingabedaten aufweist und eingerichtet ist, die Eingabedaten an die erste Maschine (1) zu übermitteln.

11. Maschinenverband nach Anspruch 8, 9 oder 10, **dadurch gekennzeichnet, dass** der Bordrechner (45) der ersten Maschine eingerichtet ist, die Steuerinformation anhand der von dem wenigstens einen Sensor (31; 37; 38; 39) gelieferten Eingabedaten zu berechnen.

12. Maschinenverband nach einem der vorhergehenden Ansprüche, soweit auf Anspruch 2 rückbezogen, **dadurch gekennzeichnet, dass** die erste Maschine (1) eine Benutzerschnittstelle (33) zum Empfang der benötigten Information von einem Benutzer (36) und/oder die zweite Maschine (2) eine Benutzerschnittstelle zum Anzeigen von empfangener benötigter Information aufweist.

13. Maschinenverband nach einem der vorhergehenden Ansprüche, soweit auf Anspruch 2 rückbezogen, **dadurch gekennzeichnet, dass** ein Bordrechner (47) der zweiten Maschine (2) eingerichtet ist, die zweite Maschine (2) anhand der empfangenen Information zu steuern.

14. Maschinenverband nach einem der vorhergehenden Ansprüche, **dadurch gekennzeichnet, dass** er Maschinen von wenigstens zwei Typen umfasst, wobei die Maschinen (1, 2, 2') des ersten Typs zur Erledigung einer ersten Teilaufgabe und die Maschinen (40, 41) des zweiten Typs zur Erledigung einer zweiten Teilaufgabe vorgesehen sind.

15. Maschinenverband nach einem der vorhergehenden Ansprüche, **dadurch gekennzeichnet, dass**
- eine erste Teilaufgabe das Sammeln von Material von einer landwirtschaftlichen Fläche oder das Verteilen von an Bord einer Maschine mitgeführtem Material auf einer landwirtschaftlichen Fläche und eine zweite Teilaufgabe den Transport des Materials zwischen den die erste Teilaufgabe erledigenden Fahrzeugen und einer Zentrale umfasst, und/oder dass
- eine Teilaufgabe die Navigation der Maschinen umfasst, und/oder dass
- eine erste Teilaufgabe die Navigation der Maschinen (1, 2, 2', 40, 41) auf öffentlichen Verkehrswegen und eine zweite Teilaufgabe die Navigation der Maschinen auf dem Feld umfasst, und/oder dass
- eine Teilaufgabe die Steuerung von landwirtschaftliches Material handhabenden Aggregaten (4; 6; 13; 16) der Maschinen (1; 2) umfasst.
